# DEMANDE DE BREVET EUROPEEN

(11) **EP 0 539 265 A1**
(43) Date de publication de la demande: **28.04.1993**
(21) Numéro de dépôt: 92402776.6
(22) Date de dépôt: 09.10.1992
(51) Int. Cl.: H04B 7/26, H04Q 11/04, H04Q 7/04

(54) **Dispositif téléphonique perfectionné pour réseau de communication téléphonique à postes fixes et postes autonomes**

(30) Priorité: 22.10.1991 FR 9113033
(71) Demandeur: DASSAULT AUTOMATISMES ET TELECOMMUNICATIONS, F-78370 Plaisir (FR)
(72) Inventeur: Soupirot, Joel, F-07800 La Voulte (FR); Lehembre, Bernard, F-78390 Bois D'Arcy (FR)
(74) Mandataire: Plaçais, Jean-Yves

(57) **Abrégé**

Une borne fixe (BFR1) est apte à coopérer avec une pluralité de postes autonomes (SA1, ..., SA4) et n'est reliée à une unité de gestion externe (UGRB1) que par l'intermédiaire d'une seule paire de fils téléphoniques (LT). Cette unité de gestion (UGRB1) incorpore alors les moyens de gestion et de contrôle des communications téléphoniques, et est reliée au réseau téléphonique commuté (CTPU) ainsi qu'à des canaux numériques (CNPU). La communication entre les postes autonomes (SA1, .... SA4) et la borne fixe (BFR1) s'effectue par l'intermédiaire d'une pluralité de canaux élémentaires de voix et de canaux élémentaires de signalisation tandis que la ligne de transmission (LT) est capable de véhiculer un canal-ligne de voix et un canal-ligne de signalisation selon un tramage ligne temporel bidirectionnel prédéterminé. La borne et son unité de gestion sont alors propres à effectuer un multiplexage/démultiplexage entre ces divers canaux.

## Description

L'invention concerne la téléphonie.

Elle est plus particulièrement destinée à servir dans un réseau de communication téléphonique entre postes fixes, tels que des postes téléphoniques, raccordés aux canaux téléphoniques du réseau et des postes autonomes, tels que des combinés téléphoniques portatifs, suceptibles d'être en communication téléphonique avec ces postes fixes.

Un tel réseau est par exemple celui connu sous la Marque déposée POINTEL et l'invention y trouve une application particulièrement avantageuse mais non limitative.

Dans un tel réseau, sont prévues des bornes fixes capables de coopération mutuelle à distance avec les postes autonomes. Ces bornes peuvent être raccordées au réseau téléphonique commuté, soit directement, soit par l'intermédiaire d'unités de raccordement centralisées. Les bornes peuvent gérer plusieurs liens téléphoniques avec plusieurs postes autonomes et il est alors notamment nécessaire de prévoir plusieurs lignes téléphoniques entre une borne et son unité de raccordement.

Par ailleurs la majeure partie des moyens alloués à la gestion des communications téléphoniques est incorporée dans la borne.

Tout ceci conduit à des équipements complexes, chers et offrant des évolutions limitées pour de nouveaux services.

La technologie actuelle ne permet pas de réduire de façon significative la taille et le coût de ces équipements.

Le but principal de l'invention est d'apporter une solution à ce problème.

Un autre but de l'invention est de garantir une large évolutivité du système.

Selon une caractéristique générale de l'invention, le dispositif téléphonique comporte:
- au moins une borne fixe comprenant
   * une interface d'émission/réception radiofréquence apte à opérer selon une pluralité de voies radiofréquence capables de véhiculer chacune au moins un canal élémentaire de voix et un canal élémentaire de signalisation selon un tramage élémentaire temporel prédéterminé, pour permettre l'échange d'informations de voix et de signalisation avec des postes autonomes,
   * une première interface-ligne avec une ligne de transmission capable de véhiculer au moins un canal-ligne de voix et un canal-ligne de signalisation selon un tramage-ligne temporel bidirectionnel prédéterminé, et
   * des moyens de traitement-borne comportant
      . des premiers moyens de multiplexage/démultiplexage propres à opérer bidirectionnellement un multiplexage/démultiplexage entre d'une part,la pluralité de canaux élémentaires de voix et de la pluralité de canaux élémentaires de signalisation, et d'autre part, un canal multiplexé de voix et un canal multiplexé de signalisation,
      . des premiers moyens de codage/décodage de trame, connectés entre les premiers moyens de multiplexage/démultiplexage et la première interface-ligne, et propres à effectuer une conversion bidirectionnelle de trames et assurer une correspondance,
         d'une part entre les informations de signalisation contenues dans le canal multiplexé de signalisation et dans le canal-ligne de signalisation, et
         d'autre part entre les informations de voix contenues dans le canal multiplexé de voix et dans le canal-ligne de voix,
         pour permettre l'échange des informations de voix et de signalisation entre la ligne de transmission et les différentes voies radiofréquence allouées aux différents postes autonomes en communication téléphonique avec des postes fixes, et
- des moyens fixes de gestion, situés en dehors des bornes fixes, comportant
   * une deuxième interface-ligne avec la ligne de transmission,
   * des moyens de raccordement direct aux canaux téléphoniques du réseau pour la circulation des informations de voix entre les postes fixes et les moyens fixes de gestion,
   * des deuxièmes moyens de codage/décodage de trame, connectés à la deuxième interface-ligne, et propres à effectuer une conversion bidirectionnelle de trames pour restituer et réciproquement recevoir les canaux multiplexés de voix et de signalisation,
   * des deuxièmes moyens de multiplexage/démultiplexage, connectés entre les deuxièmes moyens de codage/décodage de trame et les moyens de raccordement direct, et propres à opérer bidirectionnellement un multiplexage/démultiplexage entre le canal multiplexé de voix et la pluralité de canaux élémentaires de voix pour permettre l'échange des informations de voix entre les moyens de raccordement direct et les deuxièmes moyens de codage/décodage de trame, et
   * des deuxièmes moyens de traitement propres à entretenir un dialogue avec la borne par le canal multiplexé de signalisation et le canal-ligne de signalisation pour gérer l'allocation des voies radiofréquence et contrôler les communications téléphoniques.

D'autres avantages et caractéristiques de l'invention apparaîtront à l'examen de la description détaillée ci-après et des dessins annexés, sur lesquels :
- la figure 1 est un synoptique schématique d'un réseau de communication Pointel de l'art antérieur,
- la figure 2 est un synoptique schématique d'un réseau de communication selon l'invention,
- la figure 3 est un synoptique plus détaillé de la structure interne d'une borne fixe du réseau de la figure 2,
- la figure 4 est un synoptique plus détaillé d'une structure interne d'une partie d'une unité de gestion du réseau de la figure 2,
- les figures 5 à 9 illustrent le protocole de communication radiofréquence entre un poste autonome et une borne, et,
- les figures 10 et 11 illustrent le protocole de communication entre une borne et une unité de gestion du réseau de la figure 2.

Les dessins comportent pour l'essentiel des éléments de caractère certain. A ce titre ils font partie intégrante de la description et pourront non seulement servir à mieux faire comprendre la description détaillée ci-après, mais aussi contribuer, le cas échéant, à la définition de l'invention.

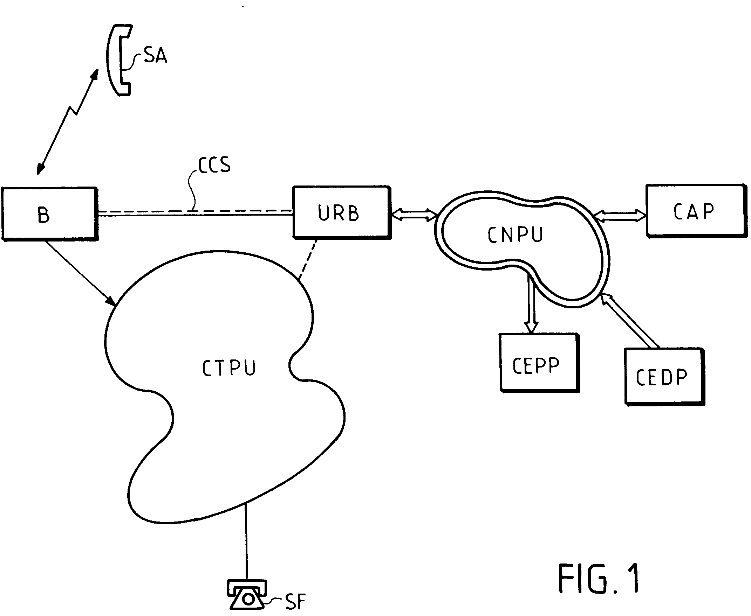

On suppose maintenant que l'invention s'applique au réseau Pointel dont on va maintenant décrire très brièvement la structure actuelle en se référant à la figure 1.

Des postes autonomes SA, tels que des combinés téléphoniques portatifs, sont capables de coopération mutuelle à distance avec des bornes fixes radio B, par l'intermédiaire d'un milieu de communication radiofréquence régies par une norme d'origine britannique dite "CAI" ("Common Air Interface").

Ces bornes fixes B sont connectées à des unités de raccordement de bornes URB par un canal de commande spécialisé CCS. Chaque unité de raccordement de bornes est propre à gérer un groupe de bornes fixes B.

Une borne fixe peut être directement connectée aux canaux téléphoniques CTPU du réseau téléphonique commuté publique. Dans ce cas, l'unité URB qui la gère n'est pas raccordée à ces canaux téléphoniques.

Une borne fixe peut ne pas être directement connectée aux canaux téléphoniques CTPU. Dans ce cas, son raccordement s'effectue par l'intermédiaire d'une unité de commutation de son unité de raccordement qui est alors directement raccordée aux canaux CTPU.

Chaque borne B ne peut qu'émettre des appels téléphoniques vers les canaux téléphoniques CTPU mais peut bien sûr émettre ou recevoir des appels radio à destination ou en provenance des postes autonomes SA.

Le réseau de communication comprend, outre les canaux téléphoniques CTPU, un milieu de communications numériques CNPU, en principe de fonctionnement par paquets, tel que le réseau TRANSPAC (marque déposée). L'expression "milieu de communications" est selon un usage dominant remplacé par le terme "canal", bien que l'homme du métier sache alors que la signification du terme canal peut ne pas être la même que dans le cas des canaux téléphoniques.

Sur ces canaux de signalisation numériques CNPU sont raccordés les différentes unités URB ainsi que d'autres constituants du réseau POINTEL désignés sous les références CAP, CEPP et CEDP.

Le centre d'autorisation POINTEL CAP gère, pour l'ensemble du réseau POINTEL, les abonnements et donc les autorisations des usagers POINTEL à appeler un poste fixe SF raccordé aux canaux téléphoniques CTPU, depuis une station autonome, et inversement.

A cet effet, les unités de raccordement de bornes URB sont reliées au centre CAP par les canaux numériques CNP.

Les unités de raccordement URB sont également reliées au centre d'exploitation principal POINTEL CEPP, par les canaux numériques CNPU, aux fins de transfert d'informations relatives aux communications téléphoniques échangées afin que le centre CEPP puisse transmettre ces informations à un système de facturation.

Les centres d'exploitation décentralisés POINTEL CEDP sont des organes de gestion destinés à superviser régionalement le fonctionnement du réseau et à détecter notamment les anomalies de fonctionnement des unités de raccordement URB et/ou des bornes fixes B.

Il est à noter que les centres CEDP peuvent communiquer, par l'intermédiaire des canaux numériques, des informations au centre CEPP à des fins de supervision nationale.

La gestion des communications téléphoniques et la répartion des ressources radiofréquence sont effectuées par les bornes fixes radio. L'unité de raccordement URB, dont le rôle principal est d'assurer un accès rapide aux bases de données centralisées, par exemple auprès des centres CAP, CEPP et CEDP, n'assure en aucun cas la gestion des communications radio.

Par ailleurs, les bornes peuvent bien entendu gérer plusieurs liens téléphoniques avec plusieurs postes autonomes mais il est alors nécessaire de prévoir plusieurs lignes téléphoniques entre une borne et l'unité de commutation de son unité de raccordement afin de pouvoir connecter ces différents usagers au réseau téléphonique commuté CTPU.

Comme, en outre, la majeure partie des moyens alloués à la gestion des communications téléphoniques est incorporée dans la borne, ce type d'architecture conduit à des équipements complexes et chers.

Par ailleurs, dans les endroits où le nombre d'utilisateurs est élevé (centres villes, gares, aéroports, centres commerciaux), une meilleure qualité de services pourrait être obtenue en centralisant la gestion d'un ensemble de bornes.

La technologie actuelle ne permet pas de résoudre ce problème.

L'invention vise à en apporter une solution.

Dans le domaine de la téléphonie, la transmission numérique sur ligne téléphonique formée d'une paire de fils a fait l'objet de nombreuses et longues recherches depuis quelques années.

Ainsi, il a tout d'abord été envisagé de transmettre les informations alternativement dans un sens puis dans l'autre, ce qui conduisait à un débit de 384 kilobits par seconde. Un tel débit souffrait cependant l'inconvénient d'offrir une portée limitée.

L'évolution suivante a été d'envisager une transmission simultanée des informations dans les deux sens. Les débits ont alors évolué progressivement depuis 120 kilobits par seconde jusqu'à 80 kilobits par seconde.

De tels modes de transmission ont nécessité le développement de circuits d'annulation d'échos permettant de restituer à partir du mélange d'informations présent sur la ligne, les informations véhiculées dans un sens et celles véhiculées dans l'autre sens.

Il a été défini un mode de transmission numérique pour un réseau Numérique à Intégration de Services (RNIS). Ce mode, conforme à l'avis Q921 du CCITT, permet la transmission simultanée de deux canaux à 64 kilobits/seconde et d'un canal à 16 kilobits/seconde.

La Demanderesse a observé de façon surprenante qu'il était possible d'utiliser une telle transmission numérique pour résoudre le problème posé.

Ainsi, selon une caractéristique générale de l'invention, le dispositif téléphonique comporte :
1) au moins une borne fixe comprenant
   * une interface d'émission/réception radiofréquence apte à opérer selon une pluralité de voies radiofréquence capables de véhiculer chacune au moins un canal élémentaire de voix et un canal élémentaire de signalisation selon un tramage élémentaire temporel prédéterminé, pour permettre l'échange d'informations de voix et de signalisation avec des postes autonomes,
   * une première interface-ligne avec une ligne de transmission capable de véhiculer au moins un canal-ligne de voix et un canal-ligne de signalisation selon un tramage-ligne temporel bidirectionnel prédéterminé, et
   * des moyens de traitement-borne comportant
      . des premiers moyens de multiplexage/démultiplexage propres à opérer bidirectionnellement un multiplexage/démultiplexage entre, d'une part, la pluralité de canaux élémentaires de voix et de canaux élémentaires de signalisation et, d'autre part, un canal multiplexé de voix et un canal multiplexé de signalisation,
      . Les premiers moyens de codage/décodage de trame, connectés entre les premiers moyens de multiplexage/démultiplexage et la première interface-ligne, et propres à effectuer une conversion bidirectionnelle de trames et assurer une correspondance,
         d'une part entre les informations de signalisation contenues dans le canal multiplexé de signalisation et dans le canal-ligne de signalisation, et
         d'autre part entre les informations de voix contenues dans le canal multiplexé de voix et dans le canal-ligne de voix, pour permettre l'échange des informations de voix et de signalisation entre la ligne de transmission et les différentes voies radiofréquence allouées aux différents postes autonomes en communication téléphonique avec des postes fixes, et
2) des moyens fixes de gestion, situés en dehors des bornes fixes, comportant
   * une deuxième interface-ligne avec la ligne de transmission,
   * des moyens de raccordement direct aux canaux téléphoniques du réseau pour la circulation des informations de voix entre les postes fixes et les moyens fixes de gestion,
   * des deuxièmes moyens de codage/décodage de trame, connectés à la deuxième interface-ligne, et propres à effectuer une conversion bidirectionnelle de trames pour restituer et réciproquement recevoir les canaux multiplexés de voix et de signalisation,
   * des deuxièmes moyens de multiplexage/démultiplexage, connectés entre les deuxièmes moyens de codage/décodage de trame et les moyens de raccordement direct, et propres à opérer bidirectionnellement un multiplexage/démultiplexage entre le canal multiplexé de voix et la pluralité de canaux élémentaires de voix pour permettre l'échange des informations de voix entre les moyens de raccordement direct et les deuxièmes moyens de codage/décodage de trame, et
   * des deuxièmes moyens de traitement propres à entretenir un dialogue avec la borne par le canal multiplexé de signalisation et le canal-ligne de signalisation pour gérer l'allocation des voies radiofréquence et contrôler les communications téléphoniques.

En d'autres termes, grâce à la combinaison de moyens ci-dessus évoquée, la borne fixe apte à coopérer avec la pluralité de postes autonomes n'est reliée aux moyens fixes de gestion que par l'intermédiaire d'une seule paire de fils téléphoniques et, les moyens de gestion et de contrôle des communications téléphoniques sont alors transférées dans les moyens fixes de gestion.

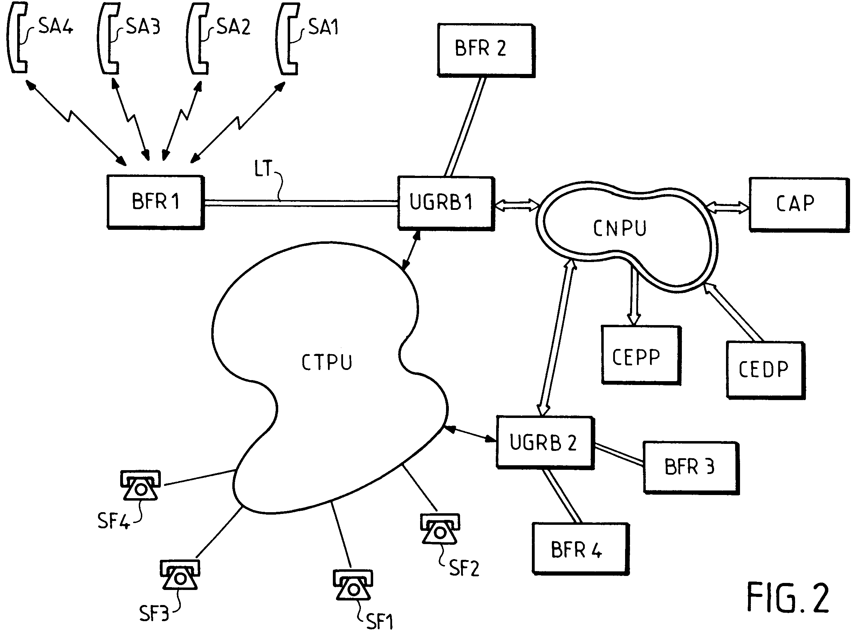

La figure 2 illustre cette nouvelle architecture de réseau.

Les moyens fixes de gestion sont ici préférentiellement regroupés au sein d'un module spécifique (ou une unité de gestion et de raccordement de bornes) UGRB1 apte à gérer et contrôler les communications téléphoniques avec les postes autonomes SA par l'intermédiaire d'une ou de plusieurs bornes fixes BFR. Par ailleurs, les bornes fixes sont ici dépourvues de moyens de raccordement direct au réseau téléphonique commuté CTPU, l'unité de gestion et de raccordement correspondante assurant un tel raccordement.

Par ailleurs, cette unité UGRB est raccordée aux canaux numériques CNPU du réseau afin d'être en relation avec les centres CAP, CEPP et CEDP.

Il est remarquable de constater qu'une borne fixe BFR, bien qu'étant apte à supporter des liens téléphoniques radio avec plusieurs postes autonomes, n'est reliée à son unité UGRB correspondante que par une paire de fils téléphoniques permettant simultanément la transmission numérique des informations de voix et de signalisation de toutes ces communications téléphoniques.

Bien entendu, comme illustré sur cette figure 2, il peut être prévu plusieurs unités UGRB (ici UGRB1 et UGRB2) aptes à gérer une ou plusieurs bornes fixes (ici BFR1-BFR4).

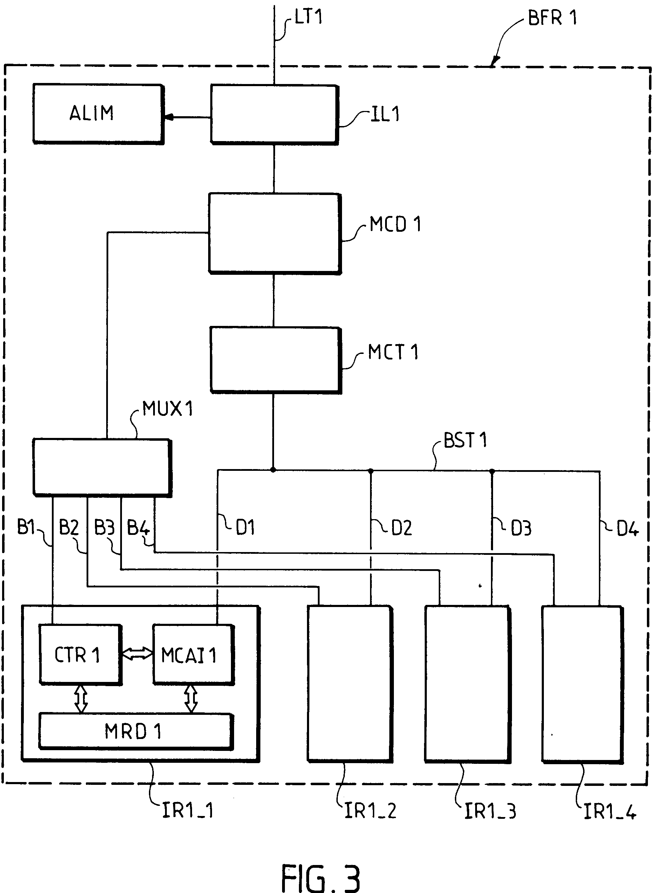

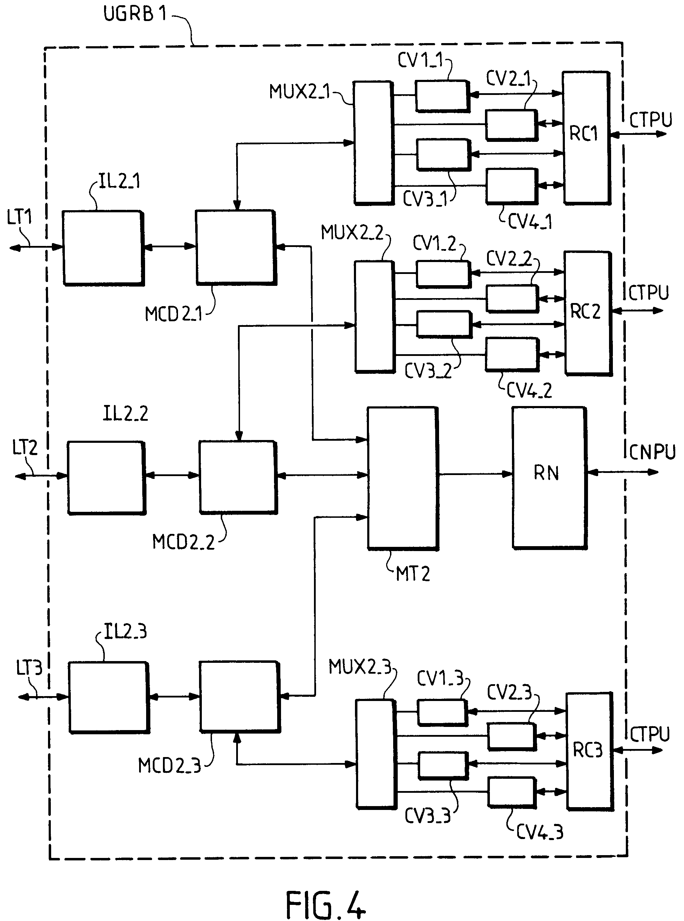

On ne s'intéresse maintenant ici qu'à l'architecture détaillée d'une borne fixe BFR1 (figure 3) et de son unité UGRB1 correspondante (figure 4).

La borne BFR1 est reliée à la ligne de transmission LT1 par une interface ligne IL1 composée de circuits passifs tels que des transformateurs, résistances et capacités, destinés à adapter la liaison et à protéger les circuits en aval.

La ligne de transmission LT1 est également utilisée pour transmettre l'énergie électrique destinée au bloc alimentation ALIM relié à l'interface IL1, et destiné à l'alimentation électrique de tous les moyens constitutifs de la borne BFR1. Ce bloc ALIM comporte ainsi notamment des convertisseurs de tension ainsi qu'une batterie tampon.

Les premiers moyens de codage/décodage de trame MCD1 sont ici réalisés par un composant spécifique tel que celui commercialisé par la société SIEMENS sous la référence PEB2091.

Les premiers moyens de multiplexage/démultiplexage se composent ici d'un multiplexeur/démultiplexeur MUX1, et d'un microcontrôleur MCT1 tel que celui commercialisé par la Société MOTOROLA sous la référence 68HC11.

Ces premiers moyens de multiplexage/démultiplexage sont connectés à l'interface d'émission/réception radiofréquence composé ici de quatre blocs IR1-1, ..., IR1-4.

Chaque bloc (par exemple celui portant la référence IR1-1) comporte un contrôleur du tramage élémentaire véhiculé entre les postes autonomes et la borne, et un microcontrôleur local MCAI1.

Ces deux composants sont reliés à un module radio MRD1 pour la coopération radiofréquence avec le poste autonome.

On pourra utiliser ici des blocs IR1-i identiques à ceux présents au sein des bornes déjà existantes.

A l'autre bout de la ligne de transmission LT1 est prévue, dans l'unité UGRB1, une deuxième interface ligne IL2-1 de structure analogue à la première interface ligne.

A cette deuxième interface ligne sont connectés les deuxièmes moyens de codage/décodage de trame MCD2-1, réalisés par un composant analogue à celui utilisé pour les premiers moyens de codage/décodage.

L'architecture de cette unité de gestion UGRB1 se poursuit d'une part par des deuxièmes moyens de multiplexage/démultiplexage MUX2-1, réalisés de façon analogue au premier multiplexeur MUX1 et, d'autre part, par un microprocesseur du type 68302 de la société MOTOROLA réalisant les deuxièmes moyens de traitement de cette unité de raccordement et de gestion.

Il est par ailleurs prévu des moyens de raccordement direct aux canaux téléphoniques CTPU du réseau. Ceux-ci comportent d'une part une interface de numérisation des signaux analogiques téléphoniques transitant sur les canaux de téléphonie. Cette interface est réalisée par exemple par des cartes du type de celles commercialisées par la société française AETA sous la référence ES090.

Par ailleurs, entre les moyens de multiplexage/démultiplexage MUX2-1 et l'interface RC1, sont prévus une pluralité (ici quatre) de moyens de conversion de débit CV1-1, ..., CV4-1 propres à assurer une conversion de débit compatible avec le débit des signaux utilisés dans l'unité de gestion UGRB1 et celui utilisé sur les canaux téléphoniques du réseau.

Ces moyens de conversion de débit sont réalisés à l'aide de quatre boîtiers qui effectuent une transformation de débit de 32 kilobits par seconde à 64 kilobits par seconde et sont par exemple ceux réalisés par la société MOTOROLA sous la référence MC 145532.

Les moyens fixes de gestion comportent des moyens de raccordement numérique RN aux canaux numériques du réseau. Ceux-ci peuvent être par exemple réalisés à base de cartes telles que celles commercialisées par la société MOTOROLA sous la référence MVME 333. Ils permettent ainsi de réaliser une interface numérique conformément à la norme internationale CCITT X25.

Bien entendu, les moyens de traitement MT2 sont reliés aux divers moyens de raccordement RC1 et RN par l'intermédiaire de deux bus classiques non représentés ici à des fins de simplification.

Une telle architecture de moyens permet de dialoguer avec une borne fixe. Cependant, l'unité de gestion UGRB1 peut comporter une pluralité de deuxièmes interfaces lignes (ici trois, en principe trente) IL2-2, IL2-3, respectivement connectées à une pluralité de bornes fixes par une pluralité de lignes de transmission LT2, LT3, une pluralité de deuxièmes moyens de codage/décodage MCD2-2, MCD2-3, une pluralité de deuxièmes moyens de multiplexage/démultiplexage MUX2-2, MUX2-3 et une pluralité de moyens de raccordement aux canaux téléphoniques du réseau, toute cette pluralité de moyens étant connectée aux deuxièmes moyens de traitement MT2 pour gérer et contrôler la pluralité de bornes fixes. Dans certains cas, les moyens MT2 peuvent être matériellement réalisés par une pluralité de composants identiques.

On va maintenant décrire en détail le fonctionnement du dispositif téléphonique selon l'invention.

Les échanges de communications radiofréquence entre les postes autonomes et les bornes fixes, régis par la norme d'origine britannique dite CAI, se font par modulation de fréquence à raison d'une bande de fréquence par communication radio.

La norme CAI est également connue sous sa référence européenne I-ETS 300131.

Conformément à cette norme, les échanges de données lors des communications téléphoniques s'effectuent en mode duplex temporel avec un débit instantané de 72 kilobits par seconde. Chaque borne fixe peut supporter une pluralité de voies radiofréquence comportant dans certains cas jusqu'à trois canaux élémentaires, à savoir :
- un canal élémentaire de signalisation (canal D) propre à assurer la transmission d'informations de signalisation,
- un canal élémentaire de voix (canal B) propre à assurer la transmission de la voix lors d'une communication téléphonique,
- un canal élémentaire de synchronisation (canal SYN) pour la synchronisation des bits et la synchronisation des mots numériques.

Afin de satisfaire toutes les situations ou fonctions particulières, les proportions de bandes de fréquences allouées à ces différents canaux peuvent varier. Certains canaux peuvent même être absents dans certaines circonstances. Ces différentes allocations sont dénommées dans cette norme des "multiplexes". Trois multiplexes sont utilisés et seront décrits plus en détail ci-après.

Pour de plus amples informations concernant cette norme I-ETS 300131, l'homme du métier pourra se référer à un document disponible auprès du "European Telecommunications Standard Institut" (ETSI). Ce document est à toutes fins utiles incorporé à la descriptiion de la présente Demande.

Le multiplex 3 (en abrégé MUX3) transporte le canal SYN et le canal D. Il est utilisé pour l'établissement ou le réétablissement d'une liaison dans le sens poste autonome vers borne. Il n'y a pas de canal B dans ce multiplex.

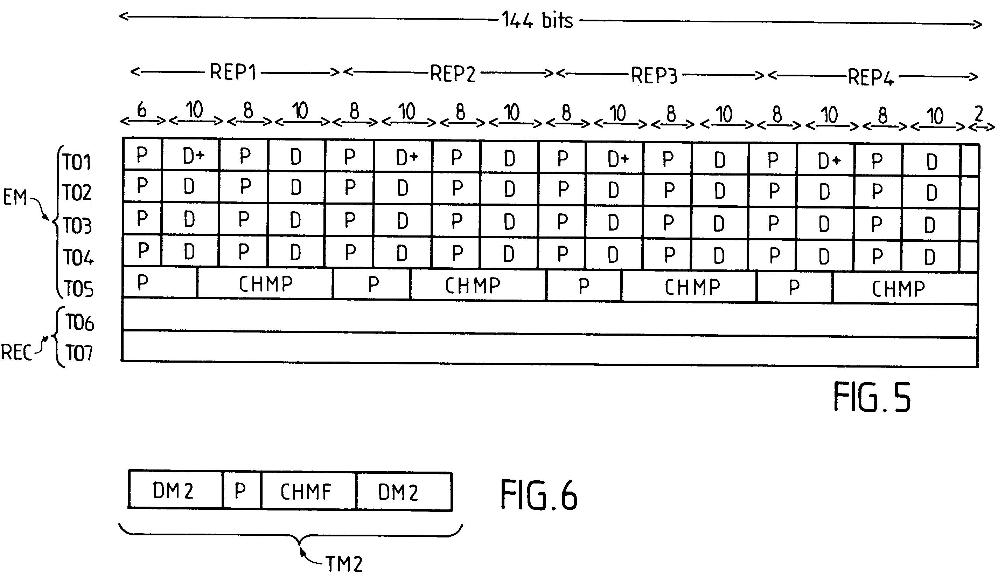

Ce multiplex 3 comprend deux phases répétées plusieurs fois. Une première phase consiste en une émission du poste autonome pendant dix millisecondes tandis que la deuxième phase consiste en une réception pendant quatre millisecondes (figure 5).

La phase d'émission comporte cinq trames élémentaires T01-T05 de 144 bits véhiculant chacune le canal D et le canal SYN. Ces deux canaux sont sous-multiplexés en quatre répétitions REP1, REP4 qui contiennent respectivement, pendant les quatre premières trames, une alternance d'un préambule P (canal SYN) et d'un mot de dix bits (canal D). Certains de ces mots de dix bits (D+) contiennent le début d'un mot de synchronisation.

Lors de la cinquième trame élémentaire TO5, le canal SYN contient un préambule P de 12 bits suivi du canal D contenant 24 bits d'un marqueur de canal CHMP.

Les réponses de la borne fixe sont détectées pendant les deux trames T06 et T07 de la phase de réception et sont exprimées selon le multiplexe MUX2 dont la structure est maintenant explicitée sommairement en référence à la figure 6.

Ce multiplexe MUX2 sert à transporter également les canaux D et SYN pour établir ou réétablir une liaison. Il n'y a également pas de canal B dans le multiplexe 2. Selon ce multiplexe, le canal D a un débit de 16 kilobits par seconde tandis que le canal SYN a un débit global de 17 kilobits par seconde.

Une trame élémentaire TM2 de ce multiplexe comporte, en ce qui concerne le canal SYN, un préambule P de 10 bits suivi d'un mot contenant un marqueur de canal CHMF qui s'avère être, dans le cas d'une réponse de la borne à un appel du poste autonome, le conjugué bit à bit du marqueur de canal CHMP. Ceci permet effectivement d'associer de façon biunivoque un poste secondaire à une borne fixe.

Le canal SYN est encadré par deux mots DM2 de 16 bits du canal D.

Le multiplexe 1, MUX1, est utilisé en mode bidirectionnel sur une liaison établie pour transmettre les canaux B et D. Il n'y a pas de canal SYN dans ce multiplexe, ce qui impose une réinitialisation de la liaison en cas de perte du synchronisme.

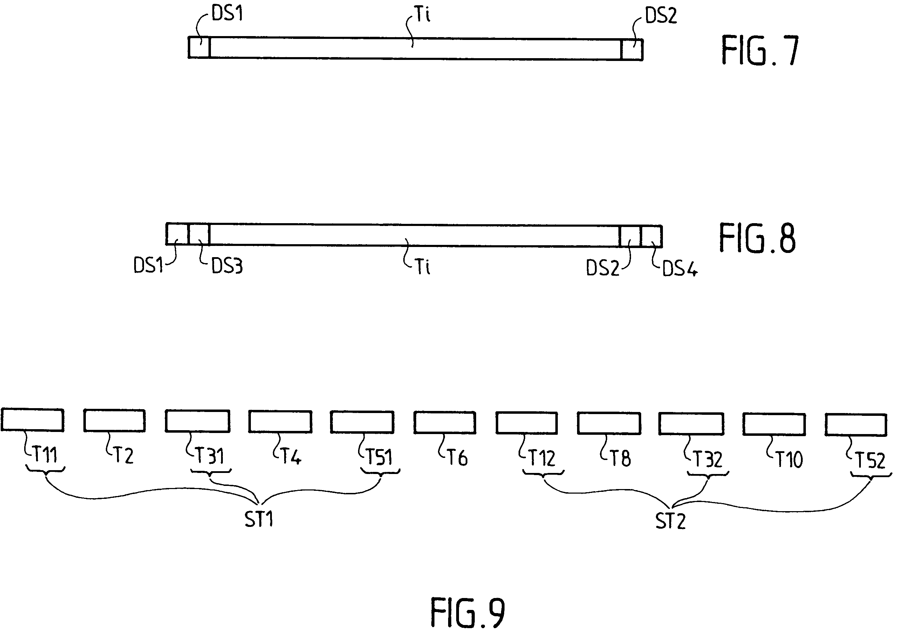

Le multiplexe MUX1 comporte deux types différents, MUX1.2 et MUX1.4 correspondant respectivement à deux tailles de messages de 66 bits ou 68 bits, illustrés sur les figures 7 et 8. Les débits correspondants sont de 1 ou 2 kilobits par seconde pour le canal D et de 32 kilobits par seconde pour le canal B.

Sur la figure 7, la trame élémentaire TI (canal B) comporte 64 bits et est encadrée par deux bits DS1 et DS2 du canal D, caractérisant ainsi un message du type MUX1.2.

Conformément au type MUX1.4, la trame élémentaire TI du canal B comporte toujours 64 bits mais est cette fois-ci encadrée par deux paires de bits DS1, DS3 et DS2, DS4 du canal D (figure 8).

La voie radiofréquence structurée conformément au multiplexage MUX1 comporte une alternance de trames d'émission, dédiées à la transmission de données depuis la borne vers les postes autonomes, et de trames dites de réception en la borne fixe, dédiées à la transmission de données émanant des postes autonomes.

La figure 9 illustre cette configuration particulière sur laquelle, à des fins de simplification, on n'a représenté que les trames élémentaires du canal B. Ainsi, les trames T11, T31 T51, T12, T32 et T52 sont des trames de réception tandis que les trames T2, T4, T6, T8 et T10 sont des trames d'émission.

Le module radio MRD1 ainsi que les composants MCAI1 et CTR1 sont propres à assurer une telle coopération radiofréquence avec les postes autonomes conformément à la norme CAI.

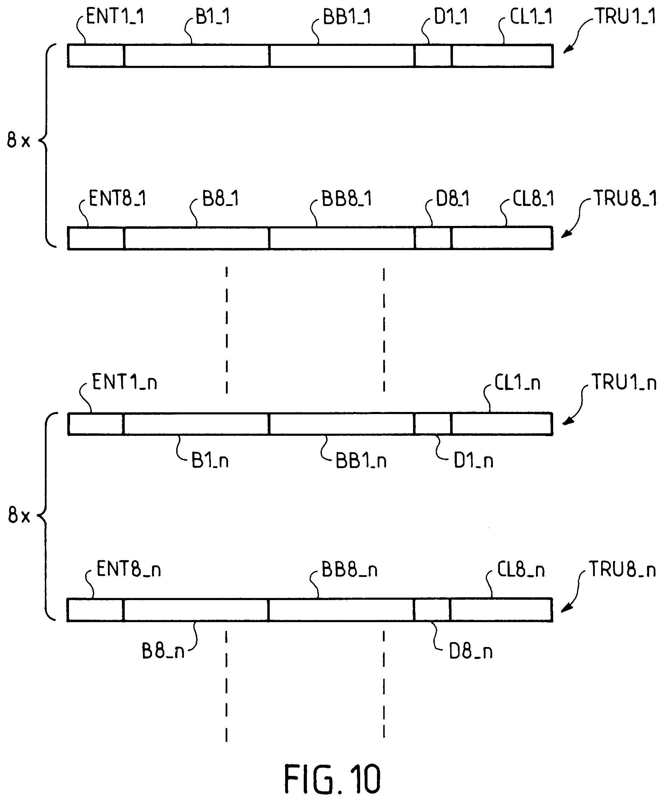

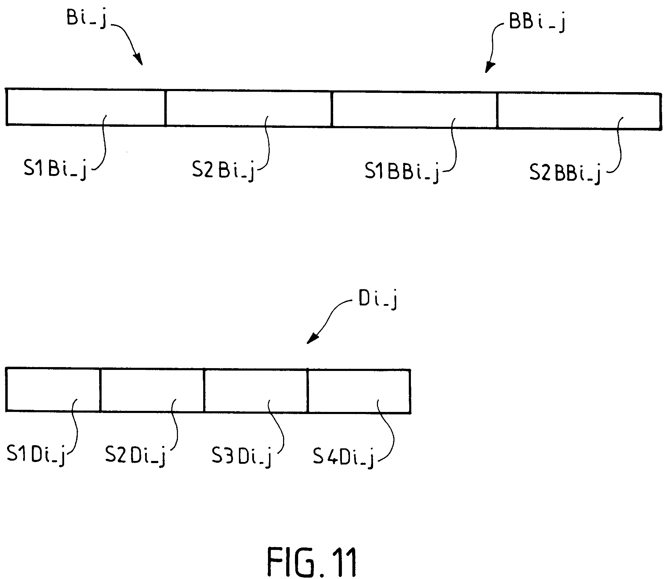

La ligne de transmission LT1 est capable de véhiculer un canal-ligne de voix, un canal-ligne de signalisation et un canal-ligne de contrôle selon un tramage-ligne temporel bidirectionnel prédéterminé illustré sur les figures 10 et 11.

Ce tramage-ligne est conforme à la spécification de l'interface U du mode de transmission RNIS type 2B1Q. Pour plus d'informations concernant le standard 2B1Q, l'homme du métier pourra se référer aux Avis G960 et G961 du livre bleu du CCITT dont les contenus sont à toutes fins utiles incorporés à la présente description.

Dans le sens de l'unité de gestion UGRB vers la borne et dans le sens inverse, circulent simultanément respectivement deux multi-trames. Chaque multi-trame est composée d'une répétition de huit trames de base TRU1-n, ..., TRU8-n d'une durée de 1,5 milliseconde chacune.

Chaque trame de base, par exemple la trame TRU1-n, comporte une en-tête ENT1-n composée des bits 1 à 18, suivie du canal-ligne de voix subdivisé en deux sous-canaux identiques B1-n et BB1-n.

On trouve ensuite le canal-ligne de signalisation D1-n qui, avec les deux sous-canaux de voix, occupe les bits 19 à 234.

Les bits 235 à 240 forment le canal de contrôle CL1-n. Ce canal-ligne de contrôle contient des informations de contrôle de la liaison téléphonique gérées par des premiers et deuxièmes moyens de gestion incorporés de façon logicielle au sein des premiers et deuxièmes moyens de codage/décodage.

Ces informations de contrôle permettent également d'effectuer une maintenance de la ligne de transmission.

Chaque sous-canal-ligne de voix véhicule un débit d'informations de 64 kilobits par seconde tandis que le canal-ligne de signalisation véhicule un débit de 16 kilobits par seconde.

Le transport simultané sur la ligne de transmission des multi-trames dans un sens et dans l'autre, nécessite de part et d'autre de la ligne de transmission des premiers et deuxièmes circuits d'annulation d'échos, qui sont incorporés au sein du composant SIEMENS PEB2091.

En l'absence de liens téléphoniques entre des postes autonomes et la borne, les deuxièmes moyens de traitement MT2 de l'unité UGRB1 sont propres à désigner au moins une voie radiofréquence de la borne pour assurer la veille radiofréquence en attente d'un appel téléphonique émanant d'un poste autonome, les premiers et deuxièmes moyens de codage/décodage étant alors propres à maintenir la ligne de transmission en état de veille.

Les moyens du bloc IR1-1 de l'interface radio de la borne sont alors propres à analyser le contenu des différents canaux élémentaires reçus en cette borne et à délivrer, en présence d'une demande d'appel téléphonique émanant d'un poste autonome, selon le multiplexe MUX3, une indication d'activité aux premiers moyens de codage/décodage MCD1.

Les premiers moyens de codage/décodage sont alors propres à activer la ligne de transmission à la réception de cette indication d'activité.

D'une manière générale, l'allocation des voies radiofréquence de la borne est gérée et contrôlée par l'unité de gestion UGRB1. A cet effet, les deuxièmes moyens de traitement MT2 sont propres à délivrer des indications d'allocation des voies radiofréquence au sein du canal-ligne de signalisation. De telles indications d'allocation permettent d'allouer les voies radiofréquence pour la veille ainsi que pour les communications téléphoniques et de changer éventuellement de voie radiofréquence au cours d'une communication téléphonique.

A la sortie des blocs IR1-1, ..., IR1-4, les quatre canaux élémentaires de voix B1-B4 et les quatre canaux élémentaires de signalisation D1-D4 sont séparés et dirigés respectivement vers le premier multiplexeur/démultiplexeur MUX1 ainsi que vers le microcontrôleur MCT1.

Les quatre canaux de voix B1-B4 sont multiplexés pour fournir un canal multiplexé de voix alimentant les premiers moyens de codage/décodage MCD1.

Ce canal multiplexé est véhiculé par un bus spécifique (I.O.M.2 : "ISDN Oriented Modular 2") à 4 fils relié entre, d'une part, la sortie du premier multiplexeur/démultiplexeur MUX1 et, d'autre part, les broches 31 (DCLK), 30 (FSC), 26 (DIN) et 27 (DOUT) du composant SIEMENS PEB2091. Pour plus d'informations concernant la spécificité de ce bus, l'homme du métier pourra se référer aux manuels utilisateurs des composants de la famille RNIS interface U SIEMENS, et notamment à celui relatif au composant SIEMENS PEB2091. Le contenu de ces manuels utilisateurs est à toutes fins utiles incorporé à la présente description.

De même, les quatre canaux de signalisation D1-D4 sont multiplexés dans le microcontrôleur MCT1, et subissent également une adaptation d'interface. En effet, les quatre canaux élémentaires de signalisation ont des interfaces asynchrones incompatibles avec le fonctionnement synchrone du composant MCD1.

Les moyens de codage/décodage MCD1 reçoivent donc en entrée d'une part le canal multiplexé de voix, d'autre part le canal multiplexé de signalisation. Le canal multiplexé de voix véhicule un débit d'informations de quatre fois 32 kilobits par seconde alors que, comme il l'a été indiqué précédemment, les deux sous-canaux-lignes de voix Bi-j et BBi-j véhiculent chacun un débit de 64 kilobits par seconde. En conséquence, les deux sous-canaux-lignes de voix BI-j et BBi-j sont propres à véhiculer ensemble les quatre fois 32 kilobits par seconde (S1Bi-j, S2Bi-j, S1BBi-j, S2BBi-j) du canal multiplexé de voix.

D'une façon analogue, le canal-ligne de signalisation Di-j est propre à véhiculer les quatre fois deux kilobits par seconde d'informations du canal multiplexé de signalisation (S1Di-j, S2Di-j, S3Di-j et S4Di-j).

Au niveau de l'unité de gestion UGRB1, les deuxièmes moyens de codage/décodage MCD2-1 sont propres à séparer la parole et la signalisation pour respectivement restituer le canal multiplexé de voix et le canal multiplexé de signalisation.

Le premier de ces canaux est démultiplexé dans le démultiplexeur MUX2-1 pour restituer les quatre canaux élémentaires de voix qui sont ensuite convertis en un débit de 64 kilobits par seconde dans les convertisseurs CV1-1, ... CV4-1 afin d'être rendus compatibles avec le débit du réseau téléphonique commuté CTPU.

Les deuxièmes moyens de traitement MT2 assurent le démultiplexage du canal multiplexé de signalisation restitué et délivrent à l'interface numérique RN les canaux élémentaires de signalisation afin que certaines au moins des informations de signalisation contenues au sein de ceux-ci puissent éventuellement circuler sur les canaux numériques CNPU du réseau.

Les opérations décrites ci-dessus sont bien entendu effectuées en sens inverse pour véhiculer les informations dans le sens de l'unité de gestion UGRB1 vers la borne.

Les avantages procurés par l'invention sont les suivants, outre ceux déjà annoncés :
- un seul circuit filaire composé de deux fils permet de connecter la borne à l'unité de gestion pour gérer simultanément quatre canaux téléphoniques et quatre canaux de signalisation.

Cette ligne de transmission LT est ainsi également utilisée pour l'alimentation totale ou partielle de la borne ainsi que pour la synchronisation de celle-ci et la synchronisation de toutes les bornes reliées à l'unité de gestion UGRB1, par l'intermédiaire du canal-ligne de signalisation.

La gestion de l'ensemble des canaux des voies radiofréquence est entièrement effectuée au sein de l'unité UGRB1, ce qui permet de partager plus efficacement les ressources radio.

Ainsi, il est plus aisé de distribuer les communications aux voies radiofréquence présentant les meilleures performances de transmission, soit en phase d'établissement soit au cours des communications. A cet effet, il s'avère encore plus facile d'offrir une continuité de service au cours d'une communication téléphonique en commutant celle-ci d'une borne à une autre lorsque l'usager se déplace. Il convient de noter ici que le dispositif selon l'invention n'est bien sûr pas incompatible avec le contenu de la Demande de brevet français No 91 04530 déposée le 12 avril 1991 au nom de la Société DASSAULT ELECTRONIQUE pour un dispositif et un procédé d'interconnexion téléphoniques destinés à offrir une continuité de services dans un réseau de communication à stations. Le contenu de cette Demande antérieure est à toutes fins utiles incorporé au contenu de la présente description.

La recherche des combinés autonomes est améliorée par le dispositif selon l'invention en ce qui concerne les appels entrants. A cet égard, l'homme du métier pourra se référer à la Demande de Brevet européen No 91 401107.7 déposée au nom de DASSAULT ELECTRONIQUE le 25 avril 1991 pour un dispositif et un procédé d'interconnexion téléphoniques. Le contenu de cette Demande de Brevet européen est également à toutes fins utiles incorporé au contenu de la présente Demande.

L'invention permet en outre d'affecter en dynamique des voies radio non utilisées pour des opérations de surveillance, de répartir les ressources radio en cas de panne d'un module émission/réception, ou d'utiliser des ressources communes (par exemple synthèse vocale) pour toutes les bornes, permettant ainsi d'améliorer la qualité de service.

La simplicité des bornes radiofréquence entraîne un encombrement réduit, une faible puissance d'alimentation et une meilleure fiabilité.

Toutes ces caractéristiques permettent de faciliter l'installation de la borne en milieu public (offrant ainsi une discrétion grâce au faible volume de celle-ci, ainsi qu'une alimentation aisée par l'unité de gestion). La maintenance d'une telle borne en est ainsi facilitée.

Enfin, l'invention offrant une transmission numérique totale (aussi bien au niveau des voies radiofréquence qu'au niveau de la liaison borne-unité de gestion, qu'au niveau du réseau téléphonique), permet de fournir aisément de nombreux services de transmission de données.

L'invention n'est pas limitée au mode de réalisation ci-dessus décrit mais en embrasse toutes les variantes contenues dans le cadre des revendications ci-après.

Bien entendu, certains des moyens décrits ci-dessus peuvent être omis dans les variantes où ils ne servent pas.

## Revendications

1. Dispositif téléphonique, destiné à servir dans un réseau de communication téléphonique entre postes fixes raccordés aux canaux téléphoniques du réseau et des postes autonomes suceptibles d'être en communication téléphonique avec ces postes fixes, caractérisé en ce qu'il comporte:
- au moins une borne fixe (BFR1) comprenant
* une interface d'émission/réception radiofréquence (IR1-1, ..., IR1-4) apte à opérer selon une pluralité de voies radiofréquence capables de véhiculer chacune au moins un canal élémentaire de voix (B) et un canal élémentaire de signalisation (D) selon un tramage élémentaire temporel prédéterminé, pour permettre l'échange d'informations de voix et de signalisation avec des postes autonomes,
* une première interface-ligne (IL1) avec une ligne de transmission (LT1) capable de véhiculer au moins un canal-ligne de voix (B1-1, BB1-1) et un canal-ligne de signalisation (D1-1) selon un tramage-ligne temporel bidirectionnel prédéterminé, et
* des moyens de traitement-borne comportant
. des premiers moyens de multiplexage/démultiplexage (MUX1, MCT1) propres à opérer bidirectionnellement un multiplexage/démultiplexage entre, d'une part, la pluralité de canaux élémentaires de voix et de canaux élémentaires de signalisation et, d'autre part, un canal multiplexé de voix et un canal multiplexé de signalisation,
. des premiers moyens de codage/décodage de trame (MCD1), connectés entre les premiers moyens de multiplexage/démultiplexage et la première interface-ligne, et propres à effectuer une conversion bidirectionnelle de trames et assurer une correspondance,
d'une part entre les informations de signalisation contenues dans le canal multiplexé de signalisation et dans le canal-ligne de signalisation, et
d'autre part entre les informations de voix contenues dans le canal multiplexé de voix et dans le canal-ligne de voix,
pour permettre l'échange des informations de voix et de signalisation entre la ligne de transmission et les différentes voies radiofréquence allouées aux différents postes autonomes en communication téléphonique avec des postes fixes, et
- des moyens fixes de gestion (UGRB1), situés en dehors des bornes fixes, comportant
* une deuxième interface-ligne (IL2-1) avec la ligne de transmission (LT1),
* des moyens de raccordement direct (RC1, CV1-1, ..., CV4-1) aux canaux téléphoniques (CTPU) du réseau pour la circulation des informations de voix entre les postes fixes et les moyens fixes de gestion,
* des deuxièmes moyens de codage/décodage (MCD2-1) de trame, connectés à la deuxième interface-ligne, et propres à effectuer une conversion bidirectionnelle de trames pour restituer et réciproquement recevoir les canaux multiplexés de voix et de signalisation,
* des deuxièmes moyens de multiplexage/démultiplexage (MUX2-1), connectés entre les deuxièmes moyens de codage/décodage de trame et les moyens de raccordement direct, et propres à opérer bidirectionnellement un multiplexage/démultiplexage entre le canal multiplexé de voix et la pluralité de canaux élémentaire de voix pour permettre l'échange des informations de voix entre les moyens de raccordement direct et les deuxièmes moyens de codage/décodage de trame, et
* des deuxièmes moyens de traitement (MT2) propres à entretenir un dialogue avec la borne par le canal multiplexé de signalisation et le canal-ligne de signalisation pour gérer l'allocation des voies radiofréquence et contrôler les communications téléphoniques.

2. Dispositif selon la revendication 1, caractérisé en ce que le tramage élémentaire temporel comporte des trames élémentaires d'émission et des trames élémentaires de réception mutuellement décalées temporellement, tandis que le tramage-ligne temporel comporte des trames-ligne d'émission et des trames-ligne de réception simultanément véhiculées,
et en ce que les premiers et deuxièmes moyens de codage/décodage comportent respectivement des premiers et deuxièmes circuits d'annulation d'échos.

3. Dispositif selon la revendication 2, caractérisé en ce que la ligne de transmission est propre à véhiculer en outre un canal-ligne de contrôle (CL1-1) contenant des informations de contrôle de la liaison téléphonique,
et en ce que les premiers et deuxièmes moyens de codage/décodage comportent respectivement des premiers et deuxièmes moyens de gestion de ces informations de contrôle.

4. Dispositif selon l'une des revendications précédentes, caractérisé en ce que les deuxièmes moyens de traitement sont propres à délivrer des indications d'allocation des voies radiofréquence au sein du canal-ligne de signalisation.

5. Dispositif selon l'une des revendications précédentes, caractérisé en ce que les deuxièmes moyens de traitement sont propres à désigner au moins une voie radiofréquence pour assurer la veille radiofréquence en attente d'un appel téléphonique émanant d'un poste autonome, tandis que les premiers et deuxièmes moyens de codage/décodage sont propres à maintenir la ligne de transmission en état de veille,
en ce que l'interface radiofréquence de la borne comporte des moyens de traitement locaux propres à analyser le contenu des différents canaux élémentaires reçus en la borne, et à délivrer, en présence d'une demande d'appel téléphonique émanant d'un poste autonome, une indication d'activité aux premiers moyens de codage/décodage,
et en ce que les premiers moyens de codage/décodage sont propres à activer la ligne de transmission à la réception de ladite indication d'activité.

6. Dispositif selon l'une des revendications précédentes, caractérisé en ce que l'interface radiofréquence de la borne comporte des moyens de traitement locaux (CTR1, MCAI1) propres à analyser le contenu des différents canaux élémentaires reçus en la borne, et à délivrer séparément les différents canaux élémentaires de voix d'une part, et les différents canaux élémentaires de signalisation correspondants d'autre part,
en ce que les premiers moyens de multiplexage/démultiplexage comportent
un premier multiplexeur/démultiplexeur (MUX1), connecté entre l'interface radiofréquence et les premiers moyens de codage/décodage, et propre à opérer sur les canaux élémentaires de voix et sur le canal multiplexé de voix, et
un microcontrôleur (MCT1), connecté entre l'interface radiofréquence et les premiers moyens de codage/décodage, et propre à opérer sur les canaux élémentaires de signalisation et sur le canal multiplexé de signalisation, ainsi qu'à effectuer une adaptation d'interface synchrone/asynchrone bidirectionnelle entre l'interface radiofréquence et les premiers moyens de codage/décodage.

7. Dispositif selon l'une des revendications précédentes, caractérisé en ce que le canal-ligne de voix est subdivisé en deux sous-canaux-lignes (B1-1, BB1-1) propres à véhiculer les informations de voix selon un même premier débit-ligne prédéterminé, tandis que chaque canal élémentaire de voix est propre à véhiculer les informations de voix selon un deuxième débit élémentaire prédéterminé égal à la moitié du premier débit-ligne,
et en ce que les premiers et deuxièmes moyens de multiplexage/démultiplexage sont propres à multiplexer/démultiplexer quatre canaux élémentaires de voix.

8. Dispositif selon la revendication 7, caractérisé en ce que les premiers et deuxièmes moyens de multiplexage/démultiplexage sont propres à multiplexer/démultiplexer un nombre de canaux élémentaires de signalisation égal au nombre de canaux élémentaires de voix.

9. Dispositif selon l'une des revendications précédentes, caractérisé en ce que les moyens de raccordement des moyens fixes de gestion comportent des moyens de conversion de débit (CV1-1, ..., CV4-1) propres à assurer une conversion de débit compatible avec le débit de voix utilisé sur les canaux téléphoniques (CTPU) du réseau et celui des canaux élémentaires de voix.

10. Dispositif selon l'une des revendications précédentes, dans lequel le réseau de communication comporte un milieu de communication numérique (CNPU), caractérisé en ce que les moyens fixes de gestion comportent en outre des moyens de raccordement numériques (RN) au milieu de communication numérique pour assurer la circulation de certaines au moins des informations de signalisation entre les moyens fixes de gestion et le milieu de communication numérique.

11. Dispositif selon l'une des revendications précédentes, caractérisé en ce que la borne comporte des moyens d'alimentation (ALIM) des différents moyens incorporés dans la borne, ces moyens d'alimentation étant connectés à la première interface ligne pour recevoir l'énergie électrique de la ligne de transmission.

12. Dispositif selon l'une des revendications précédentes, caractérisé en ce que les moyens fixes de gestion comportent une pluralité de deuxièmes interfaces-ligne respectivement connectées à une pluralité de bornes fixes par une pluralité de lignes de transmission, une pluralité de deuxièmes moyens de codage/décodage, une pluralité de deuxièmes moyens de multiplexage/démultiplexage et une pluralité de moyens de raccordement aux canaux téléphoniques du réseau, toute cette pluralité de moyens étant connectée aux deuxièmes moyens de traitement pour gérer et contrôler la pluralité de bornes fixes.

13. Dispositif selon la revendication 12, caractérisé en ce que les deuxièmes moyens de traitement sont propres à assurer la synchronisation de toutes les bornes par l'intermédiaire du canal-ligne de signalisation de chaque ligne de transmission.

14. Dispositif selon l'une des revendications précédentes, caractérisé en ce que les moyens fixes de gestion sont incorporés au sein d'un module spécifique.
